Europäisches Patentamt

European Patent Office

Office européen des brevets

(19)

(11) **EP 1 407 951 A1**

(12) **DEMANDE DE BREVET EUROPEEN**

(43) Date de publication:
**14.04.2004 Bulletin 2004/16**

(51) Int Cl.⁷: **B60T 13/74**, B60T 7/10

(21) Numéro de dépôt: 03292390.6

(22) Date de dépôt: **29.09.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **07.10.2002 FR 0212431**

(71) Demandeur: **Peugeot Citroen Automobiles SA 78943 Vélizy-Villacoublay Cedex (FR)**

(72) Inventeur: **Krapf, Pascal 78000 Versailles (FR)**

(74) Mandataire: **Fréchède, Michel et al Cabinet Lavoix 2 Place d'Estienne d'Orves 75441 Paris Cedex 09 (FR)**

(54) **Procédé de décollement des plaquettes de frein collées par le gel ou la glace sur le disque d'un système de frein de stationnement piloté et système de frein de stationnement piloté correspondant**

(57) L'invention concerne un procédé et un système de frein de stationnement piloté permettant le décollement des plaquettes de frein (P) collées sur un disque (D).

Le frein de stationnement étant en position de commande desserré, le procédé consiste à et le système de frein permet d'appliquer au moins une impulsion (ΔP) d'effort supplémentaire aux plaquettes (P) et de transférer une partie de l'énergie mécanique fournie à l'interface plaquette/glace/disque sous forme de chaleur latente de fusion de la glace (G) présente à l'interface plaquette/glace/disque et de provoquer une augmentation de température et du volume de glace fondue, entraînant le décollement des plaquettes (P).

Application à l'industrie automobile.

FIG.2a

**Description**

L'invention concerne un procédé de décollement des plaquettes de frein collées parle gel ou par la glace sur le disque d'un système de frein de stationnement piloté.

Les véhicules actuels peuvent comporter un système de frein piloté électriquement qui remplace la force musculaire du conducteur nécessaire pour serrer le traditionnel frein à main.

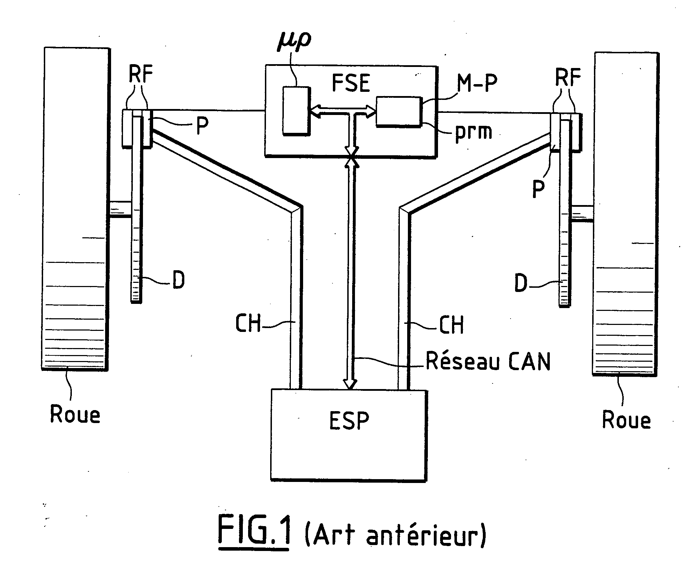

Les véhicules actuels les plus modernes, ainsi que représenté en figure 1, disposent, habituellement, d'un frein de stationnement piloté, FSE, commandé par un calculateur, mais, également, d'un système de contrôle de stabilité ESP qui permet en outre le contrôle de la pression de freinage roue par roue. Le système de contrôle ESP commande par des canalisations hydrauliques, CH, les récepteurs de frein RF porteurs des plaquettes, P, appliquées sur le disque D associé à chaque roue. Le frein de stationnement piloté FSE est interconnecté en réseau, réseau CAN, au système de contrôle ESP et permet de contrôler le déplacement, la course, des récepteurs de frein et la pression exercée par les plaquettes P sur le disque D, à partir d'une unité de calcul µP et d'une mémoire de programme prm comportant un module de programme M-P.

Les systèmes de frein de stationnement piloté des véhicules les plus modernes comportent, en outre, une fonction nouvelle, le frein automatique, grâce à laquelle le frein de stationnement piloté se serre automatiquement, à la coupure du moteur, et se desserre automatiquement, lorsque le conducteur met le véhicule en mouvement. Cette fonction est commandée à partir du module de programme M-P.

La fonction de frein automatique précitée a toutefois mis en évidence, en raison de la rupture de l'automaticité, l'inconvénient, déjà connu avec les freins à main classiques, du collage des plaquettes de frein sur le disque par le gel ou la glace.

En effet, de l'eau provenant soit de la condensation, soit de projections intempestives, peut mouiller les plaquettes et le disque.

Lorsque les plaquettes sont maintenues au contact du disque par le frein de stationnement, l'eau pénètre dans les interstices entre le disque et la plaquette.

Dans ces conditions, de très basses températures, station de ski ou autre, l'eau gèle et colle les plaquettes au disque. Il est alors impossible de mettre le véhicule en mouvement.

Pour cette raison, il apparaît préférable de ne pas serrer le frein de stationnement et d'inhiber le fonctionnement automatique du frein FSE dans ces situations.

Dans ce but, on utilise, à l'heure actuelle, une fonction d'inhibition qui, par l'intermédiaire d'un bouton poussoir ou d'un menu déroulant, permet au conducteur d'inhiber la fonction de serrage automatique.

La solution précitée n'est pas satisfaisante, pour les raisons ci-après :

- l'oubli, par le conducteur, d'utiliser la fonction d'inhibition ne peut être totalement exclu ;
- dans l'hypothèse de l'utilisation de la fonction d'inhibition par ce dernier, il existe des cas où, pour sécuriser le stationnement du véhicule, le conducteur doit serrer le frein de stationnement ; dans les deux cas précités, le problème inhérent au collage des plaquettes sur le disque n'est pas résolu ;
- l'utilisation de la fonction d'inhibition par le conducteur, en l'absence du serrage du frein de stationnement peut, au contraire, s'avérer préjudiciable à la sécurité du véhicule en stationnement, voire des tiers.

La présente invention a pour objet de remédier aux inconvénients des systèmes de frein de stationnement piloté de stationnement actuels, notamment lorsque ces derniers sont équipés de la fonction de frein de stationnement automatique.

Un autre objet de la présente invention est, en particulier, la mise en oeuvre d'un procédé de décollement des plaquettes de frein collées par le gel ou la glace sur le disque d'un système de frein de stationnement piloté et d'un système de frein de stationnement piloté correspondant dans lequel la fonction d'inhibition de frein de stationnement automatique est supprimée.

Le procédé de décollement des plaquettes de frein collées, par le gel ou la glace, sur le disque d'un système de frein de stationnement piloté, objet de la présente invention, est remarquable en ce que, le frein de stationnement piloté ayant été préalablement desserré, il consiste à appliquer au moins une impulsion d'effort supplémentaire aux plaquettes. Ceci permet de transférer une partie de l'énergie mécanique fournie par le travail des forces créées par cette ou ces impulsions d'effort supplémentaire à l'interface plaquette/glace/disque sous forme de chaleur latente de fusion de la glace présente à l'interface plaquette/glace/disque et de provoquer une augmentation de température et du volume de glace fondue, entraînant le décollement des plaquettes. Il se peut en outre que de l'eau soit également présente à l'interface.

Le système de frein de stationnement piloté de véhicule, objet de la présente invention, comprend au moins un calculateur et une mémoire de programme d'actionnement des récepteurs de frein et des plaquettes vis-à-vis du disque de frein associé à chaque roue du véhicule. Il est remarquable en ce que la mémoire de programme comporte, en outre, un module de programme de décollement de plaquettes enregistré dans la mémoire de programme exécutable par le calculateur et permettant d'engendrer au moins une impulsion d'effort supplémentaire appliqué aux plaquettes pour exécuter le processus de décollement selon le procédé précité.

Le procédé et le système de frein de stationnement piloté objets de la présente invention trouvent application à l'industrie automobile en général, construction de véhicules neufs et/ou mise à niveau de véhicules actuels existants.

Ils seront mieux compris à la lecture de la description et à l'observation des dessins ci-après, dans lesquels, outre la figure 1 relative à l'art antérieur :

- la figure 2a représente, à titre purement illustratif, les étapes de mise en oeuvre du procédé objet de la présente invention ;
- la figure 2b représente, à titre purement illustratif, des chronogrammes de signaux représentatifs de l'évolution de la course des récepteurs de frein détectée par le frein de stationnement piloté FSE, de l'effort exercé par le frein de stationnement piloté FSE, de la pression exercée par les plaquettes de frein sur le disque au cours de la mise en oeuvre du procédé objet de l'invention ;
- la figure 3a représente, à titre purement illustratif, un schéma fonctionnel d'un système de frein de stationnement piloté pour véhicule permettant la mise en oeuvre du procédé objet de la présente invention ;
- la figure 3b représente, à titre d'exemple non limitatif, un organigramme du mode opératoire du système de frein de stationnement piloté objet de la présente invention, lors de l'exécution du processus de décollement des plaquettes de frein ;
- la figure 3c représente, à titre purement illustratif, le détail du mode opératoire du dispositif objet de la présente invention, lors de l'exécution d'une étape spécifique de test de collage des plaquettes de frein, cette étape spécifique étant exécutée dans le cadre du procédé de décollement des plaquettes de frein selon l'invention.

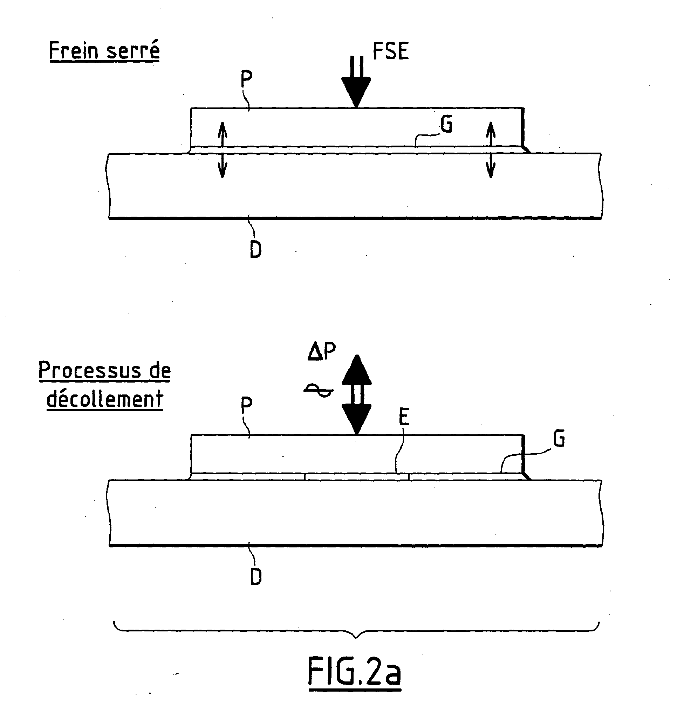

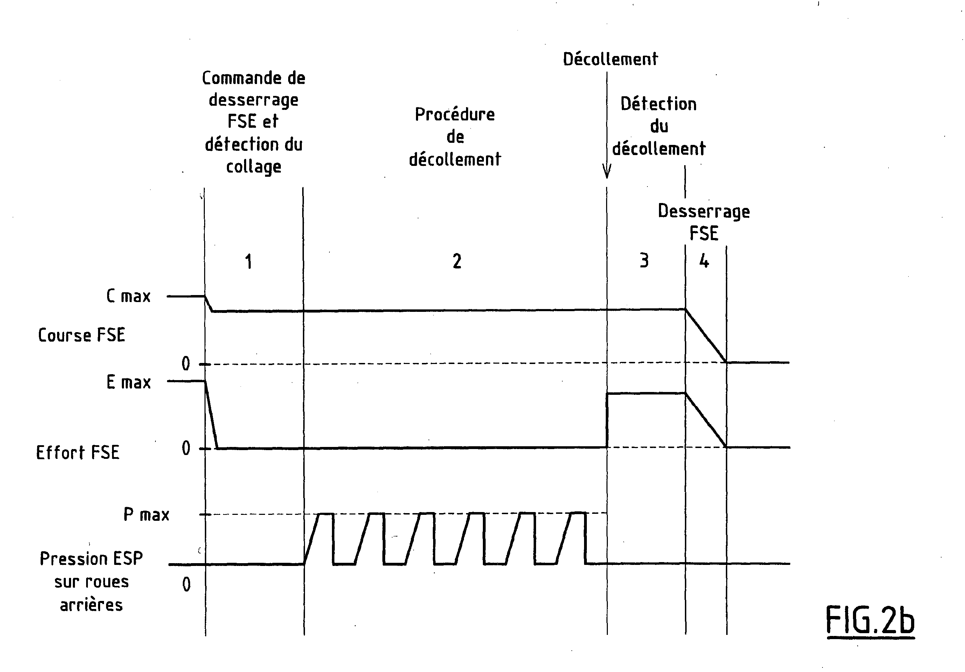

Une description plus détaillée du procédé de décollement des plaquettes de frein collées par le gel ou la glace sur le disque d'un système de frein de stationnement piloté conforme à l'objet de la présente invention sera maintenant donnée en liaison avec les figures 2a et 2b.

Sur la figure 2a, on a représenté une plaquette de frein P collée à un disque D par l'intermédiaire d'une couche de glace G ou de givre, le frein étant en position serré par l'intermédiaire d'un frein de stationnement piloté FSE exerçant une force constante.

Lorsque le conducteur souhaite procéder au démarrage du véhicule et à la mise en mouvement de ce dernier, il provoque une commande de desserrage du frein de stationnement piloté FSE et le frein de stationnement piloté FSE a donc été préalablement desserré, alors que la plaquette P collée par la glace G reste collée au disque D, la plaquette maintenant également le récepteur de frein dans la position de frein serré. Par préalablement desserré, on entend qu'une fois le conducteur rentré dans le véhicule, il commande directement ou indirectement le relâchement de l'effort appliqué sur les récepteurs de freinage.

Conformément au procédé de décollement des plaquettes de frein collées objet de la présente invention, ainsi que représenté en figure 2a, le processus de décollement consiste à appliquer au moins une impulsion d'effort supplémentaire aux plaquettes P, cette impulsion d'effort étant notée $\Delta P$.

L'impulsion supplémentaire d'effort appliquée permet de transférer une partie de l'énergie mécanique fournie par le travail des forces créées par l'impulsion d'effort supplémentaire à l'interface plaquette/glace/disque sous forme de chaleur latente de fusion de la glace G, de l'eau, notée E sur la figure 2a, pouvant en outre être présente à l'interface dans le processus de décollement. Ce transfert permet de provoquer une augmentation de température et de volume de glace fondue, mélange de glace G et d'eau E, entraînant le décollement des plaquettes P.

On indique que le procédé objet de la présente invention est basé sur les propriétés physico-chimiques de l'eau selon lesquelles la température de fusion de l'eau diminue lorsque la pression augmente. Ainsi, à une température inférieure à 0°C, il est possible de faire fondre la glace G collant les plaquettes P au disque D en augmentant la pression exercée sur la plaquette P.

D'une manière générale, on indique que les véhicules actuels disposent d'un frein de stationnement piloté FSE et sont, en outre, également équipés d'un système qui permet de contrôler la pression de freinage roue par roue, le système ESP tel que représenté en figure 1 par exemple. D'autres systèmes, tels que le système dit EHB, peuvent être utilisés.

D'une manière plus spécifique, on indique que l'application d'au moins une impulsion d'effort supplémentaire aux plaquettes P peut être effectuée en utilisant le système de pilotage de l'effort de freinage tel que le système ESP décrit en figure 1, le système EHB précité ou même le système de frein de stationnement piloté FSE par exemple.

Dans le processus de décollement mis en oeuvre, on indique que la glace étant solide, l'effort mécanique exercé du fait de la pression due à l'effort supplémentaire appliqué ne chasse pas l'eau qui s'est introduite entre la plaquette et le disque, mais augmente la pression appliquée à la glace.

Une partie de la glace G fond alors localement et se transforme en eau E, ainsi que représenté sur la figure 2a. Dans cette opération, la glace G et l'eau de fusion E emmagasinent sous forme de chaleur latente de fusion une partie de l'énergie mécanique fournie par le travail de l'effort supplémentaire appliqué.

L'énergie précitée, convertie en chaleur, ne peut plus se reconvertir en travail lorsque l'effort est relâché. En conséquence, elle contribue donc à augmenter l'énergie d'origine calorifique de l'eau E et de la glace G présentes à l'interface plaquette/glace/disque. Cette augmentation d'énergie consiste en une augmentation de la température de la glace G et/ou en l'augmentation du volume de la glace fondue, c'est-à-dire de l'eau E.

Selon un aspect particulièrement avantageux du procédé objet de la présente invention, on indique que l'impulsion d'effort supplémentaire est avantageusement répétée successivement. L'énergie calorifique est ainsi augmentée progressivement jusqu'au décollage des plaquettes.

Sur la figure 2a, on a représenté la répétition successive de l'impulsion d'effort supplémentaire par la double flèche et le symbole alternatif indiquant la répétition.

Ceci permet non seulement d'augmenter progressivement l'énergie calorifique du mélange ou glace, mais également d'appliquer des vibrations mécaniques à l'interface plaquette/glace/disque et de favoriser ainsi le processus de décollement par rupture de la glace G.

On comprend, en particulier, qu'en répétant plusieurs fois le cycle de compression-détente, c'est-à-dire d'application de la variation de pression $\Delta P$ sur les plaquettes concernées, on peut ainsi faire fondre la totalité de la glace G et libérer la plaquette P.

Le procédé objet de la présente invention est applicable quelle que soit la technologie du frein de stationnement mise en oeuvre, par tire-câble ou étrier motorisé, par exemple.

Différentes indications de mise en oeuvre du procédé objet de la présente invention seront maintenant données en liaison avec la figure 2b, lorsque, à titre d'exemple non limitatif, le frein FSE est de type tire-câble.

Les freins de stationnement piloté FSE de type tire-câble effectuent un diagnostic du câble.

Dans ce but, ils utilisent des informations de course et d'effort appliqués par le frein FSE.

Le processus d'acquisition des informations précitées dépend du choix technologique interne au frein FSE.

A titre d'exemple non limitatif, les informations précitées peuvent être obtenues à partir des caractéristiques du moteur, de sa consommation électrique, de la durée de serrage/desserrage et/ou à partir d'un capteur qui mesure l'effort appliqué sur le câble de frein et/ou d'un capteur de course.

Pour un comportement nominal du système de frein FSE, la course du câble au niveau du tire-câble est égale à la somme de la course du récepteur de frein et de la déformation élastique du câble. L'effort exercé par le frein FSE est maximum lorsque ce dernier est serré, les câbles étant tendus et les plaquettes P étant au contact du disque D. Il est nul lorsque les récepteurs de frein sont au repos et le câble détendu.

Lorsque les plaquettes P sont collées par le gel ou la glace, la courbe course-effort du frein FSE est fortement modifiée car les plaquettes P n'ont alors plus aucun degré de liberté. L'effort de rappel du récepteur de frein est entièrement bloqué par le collage des plaquettes et la course du câble au niveau du tire-câble est alors uniquement due à la déformation élastique du câble considéré. L'effort exercé par le frein FSE est maximum lorsque ce dernier est serré, câble tendu et plaquettes P au contact du disque D, et il est nul lorsque les récepteurs de frein sont au repos et le câble détendu.

Sur la figure 2b, on a représenté la course du frein FSE entre une position 0 et une position $C_{max}$, l'effort exercé par le frein FSE entre une position 0 et une position $E_{max}$ et enfin la pression exercée sur les plaquettes par le système de contrôle de freinage ESP entre une valeur nulle 0 et une pression maximale $P_{max}$.

Les chronogrammes des signaux précités sont représentés lors de la mise en oeuvre du procédé objet de l'invention, ainsi qu'il sera décrit ci-après.

En particulier, le procédé objet de l'invention, tel que représenté en figure 2b, comprend, préalablement à l'étape consistant à appliquer au moins une impulsion d'effort supplémentaire, une étape de détection de collage des plaquettes P.

Sur la figure 2b, on comprend que, sur commande de desserrage du frein FSE, les plaquettes P étant collées, la course FSE s'établit entre la valeur maximale $C_{max}$ pour laquelle le frein FSE était serré et une valeur intermédiaire à la valeur 0, car les plaquettes P sont bloquées et n'ont pas de degré de liberté.

De même, l'effort exercé par le frein FSE passe de la valeur maximale $E_{max}$ à la valeur 0 bien que les plaquettes P ne soient pas décollées.

Le procédé objet de l'invention consiste alors à mettre en oeuvre, préalablement à l'application d'une impulsion d'effort supplémentaire, une étape de détection de collage des plaquettes.

A titre d'exemple non limitatif, mais de manière préférentielle, on indique que l'étape de détection de collage des plaquettes peut être exécutée par comparaison entre l'évolution normale, c'est-à-dire sans collage des plaquettes, de l'effort en fonction de la course et l'évolution mesurée de la course FSE et l'évolution anormale, les plaquettes P étant collées.

Suite à la détection du collage des plaquettes, le processus d'application d'au moins une impulsion d'effort supplémentaire est alors exécuté pour mettre en oeuvre le processus de décollement.

Cette opération est réalisée par l'application, par exemple, d'un effort supplémentaire par l'intermédiaire du système ESP entre la valeur 0 et une valeur de pression $P_{max}$.

Ainsi que représenté sur la figure 2b, chaque impulsion d'effort supplémentaire peut être constituée par une pression supplémentaire appliquée et maintenue sur chaque plaquette de frein P pendant une durée de maintien comprise entre 0,01 s et 0,1 s, de préférence inférieure ou égale à 1 s. Cette valeur permet de tendre vers l'équilibre thermodynamique. Au-delà de cette valeur, la température a tendance à s'uniformiser au niveau du disque et de l'étrier. Ceci a plutôt tendance à réduire l'efficacité du procédé selon l'invention, lequel permet d'obtenir une fonte de la glace importante mais localisée.

Dans un mode de mise en oeuvre spécifique, chaque impulsion d'effort supplémentaire successive peut être séparée d'une impulsion d'effort supplémentaire précédente d'une durée de séparation également comprise entre 0,01 s et 1 s. Cette durée est plutôt plus courte que la durée de maintien, l'énergie calorifique devant diffuser localement dans la glace. Si le temps de séparation est trop long, l'énergie calorifique peut être diffusée dans le disque et l'efficacité diminuée.

Ainsi, sur la figure 2b, on a représenté des impulsions d'effort, c'est-à-dire de pression appliquée sur les plaquettes collées par l'intermédiaire du système ESP, présentant une forme sensiblement rectangulaire.

De préférence, la fréquence de répétition des impulsions successives d'effort supplémentaire peut être comprise entre 1 Hz et 50 Hz.

Lorsque l'étape de détection de collage des plaquettes a révélé l'existence d'un collage de ces dernières, ainsi que représenté sur la figure 2b, le frein FSE est placé dans une position où le câble est entièrement détendu. En particulier, le frein FSE n'exerce, dans cette situation, aucun effort.

Le frein FSE permet alors de lancer le processus de décollement proprement dit en lançant, par exemple, un ordre de commande au système ESP, ainsi qu'il sera décrit ultérieurement dans la description. Le système ESP va alors, par l'intermédiaire des commandes hydrauliques CH, commander l'application de l'effort supplémentaire, c'est-à-dire de chaque impulsion successive de pression $\Delta P$ sur les plaquettes de frein par l'intermédiaire des récepteurs de frein RF.

Il est, en outre, possible de mettre en oeuvre le processus de décollement proprement dit en appliquant les impulsions successives d'effort supplémentaire par l'intermédiaire du tire-câble seul.

Toutefois, la solution qui consiste à utiliser le système ESP ou un système EHB est plus souple, car l'application des efforts est contrôlable avec plus de précision, en particulier en ce qui concerne le temps d'application avec un système ESP ou un système EHB qu'avec un tire-câble.

En outre, et en raison des temps de réponse moindres, notamment, l'implication pour la mise en oeuvre du processus de décollement du système ESP ou du système EHB permet l'exécution d'un plus grand nombre de cycles pendant la même durée.

En ce qui concerne le choix de la fréquence de répétition des impulsions successives, on indique que ce choix est effectué au cours d'essais sur chaque modèle de types de frein et de plaquettes par exemple. Ces essais permettent d'optimiser la durée du processus de décollement compte tenu de son efficacité. On indique qu'une fréquence rapide permet de réaliser un grand nombre de cycles, mais que, toutefois, elle n'est pas favorable à la transformation d'énergie mécanique en énergie calorifique. inversement, une fréquence lente permet de tendre vers l'équilibre thermodynamique et, ainsi, d'optimiser la transformation d'énergie mécanique en chaleur bien que le choix d'une fréquence lente soit susceptible d'augmenter la durée du processus de décollement pour le même nombre de cycles. Pour des raisons de sécurité, la procédure de décollement n'est lancée que si le véhicule est à l'arrêt, vitesse nulle ou inférieure à un seuil.

Enfin, on indique que l'application d'au moins une impulsion d'effort supplémentaire, c'est-à-dire le processus de décollement, est suivie d'une étape de détection du décollement des plaquettes.

On comprend, en effet, que tant que les plaquettes sont collées, aucun effort n'est appliqué au câble, lequel est entièrement détendu. La mise en pression effectuée par le système ESP ou le système EHB n'a pas d'impact sur la tension du câble.

Dans un mode de mise en oeuvre spécifique, on indique que l'étape de détection de décollement des plaquettes peut consister, avantageusement, à détecter une variation de l'effort appliqué au câble sur rappel des récepteurs de frein. Ainsi, le décollement des plaquettes P est détecté par un saut ou variation de l'effort appliqué au câble au moment où les plaquettes se décollent effectivement et où l'effort de rappel des récepteurs de frein s'applique à nouveau sur le câble.

Lorsque le décollement des plaquettes P a été détecté, ainsi que mentionné précédemment, et pour des raisons de sécurité, le frein FSE transmet cette information vers le réseau multiplexé au système ESP ou système EHB et le processus de décollement est alors interrompu.

On comprend ainsi que le processus de décollement est répété tant que l'étape de détection de décollement n'a pas révélé le décollement de ces dernières, mais qu'il est suspendu lorsque l'étape de détection du décollement des plaquettes révèle le décollement de celles-ci.

Ainsi que représenté, en outre, sur la figure 2b et pour des raisons de sécurité, lorsque le décollement des plaquettes est détecté, alors le frein FSE est sollicité pour appliquer à nouveau l'effort maximal $E_{max}$ aux plaquettes de frein et replacer le véhicule en stationnement sécurisé.

La procédure de desserrage du frein FSE peut alors être reprise et menée, conformément à la procédure habituelle lorsque les plaquettes P ne sont pas collées sur le disque D.

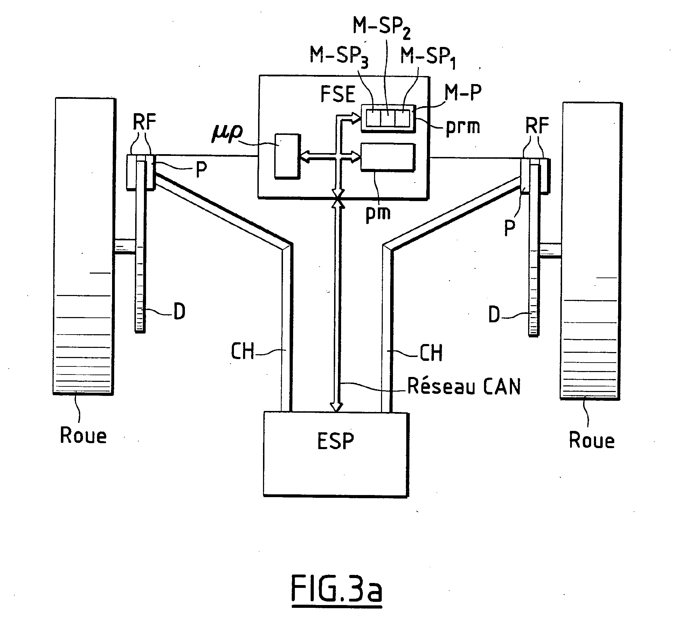

Une description plus détaillée d'un système de frein de stationnement piloté permettant la mise en oeuvre du procédé objet de la présente invention sera maintenant donnée avec les figures 3a à 3c.

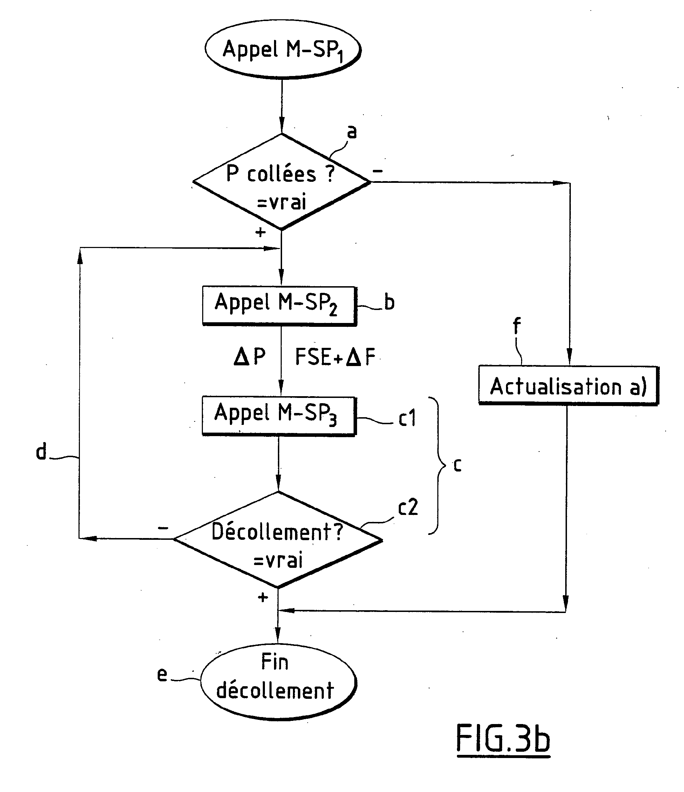

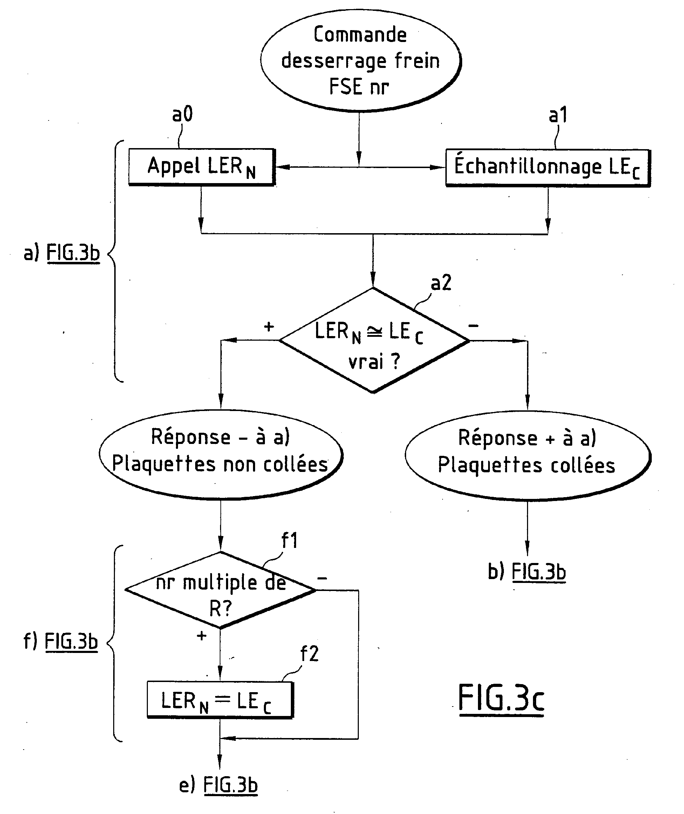

De manière plus particulière, on indique que les éléments de frein FSE connus de la technique et représentés à la fois en figure 1 et en figure 3b portent les mêmes références.

En particulier, sur la figure 3a, sont représentés un calculateur désigné μP, une mémoire de pro-

gramme MP permettant d'exécuter l'actionnement des récepteurs de frein et des plaquettes vis-à-vis du disque de frein D associé à chaque roue du véhicule, l'actionnement des récepteurs de frein précités étant exécuté par l'intermédiaire du système ESP ou du système EHB.

En outre, et selon un aspect remarquable du système de frein FSE objet de l'invention, celui-ci comporte un module de programme de décollement de plaquette enregistré dans la mémoire de programme prm, ce module de programme étant, bien entendu, exécutable par le calculateur. Il permet d'engendrer au moins une impulsion d'effort supplémentaire appliqué aux plaquettes par l'intermédiaire du système ESP et de mettre en oeuvre ainsi, conformément au procédé objet de l'invention, le transfert d'une partie de l'énergie mécanique fournie par le travail des forces créées par une ou plusieurs impulsions d'effort supplémentaire à l'interface plaquette/glace/disque sous forme de chaleur latente de fusion de la glace présente à l'interface plaquette/glace/disquette précitée pour provoquer une augmentation de température et du volume de glace fondue entraînant le décollement des plaquettes.

Ainsi que représenté sur la figure 3a, le module de programme de décollement comprend, avantageusement, un premier module de sous-programme, noté $M$-$SP_1$, de détection de collage des plaquettes, un deuxième module de sous-programme, noté $M$-$SP_2$, de génération d'au moins une impulsion d'effort supplémentaire et d'application de cette ou ces impulsions d'effort supplémentaire sur les plaquettes et un troisième module de sous-programme, noté $M$-$SP_3$, de détection du décollement des plaquettes P.

Le mode opératoire du système de frein FSE objet de la présente invention sera maintenant décrit en liaison avec la figure 3b.

En référence à la figure précitée, sur appel du premier module de sous-programme $M$-$SP_1$, cet appel étant réalisé, par exemple, au démarrage du véhicule par temps froid, le module de programme de décollement permet de lancer, par le module de sous-programme $M$-$SP_1$, une première étape de test de collage des plaquettes, cette étape de test est notée $\underline{a}$ sur la figure 3b.

Sur réponse positive à la première étape de test, les plaquettes P étant collées, le module de programme de décollement permet au moins d'appeler le deuxième module de sous-programme $M$-$SP_2$ pour engendrer et appliquer au moins une impulsion d'effort supplémentaire aux plaquettes P. Cette opération est représentée à l'étape $\underline{b}$ de la figure 3b. Bien entendu, suite à l'application d'un nombre déterminé d'impulsions d'effort, le module de programme de décollement permet d'appeler le troisième module de sous-programme $M$-$SP_3$ pour exécuter une deuxième étape $\underline{c}$ de test de décollement des plaquettes, ces opérations étant représentées aux étapes $c_1$ et $c_2$ de la figure 3b. Sur réponse négative à la deuxième étape de test $c_2$, le module de programme de décollement permet alors, si nécessaire, les plaquettes n'étant toujours pas décollées, de répéter, par exemple, les étapes $\underline{b}$ et $\underline{c}$ précédentes, tant que la deuxième étape de test $c_2$ n'est pas vérifiée à la valeur vraie.

Avantageusement, le module $M$-$SP_3$ (résidant par exemple dans le calculateur du frein de stationnement piloté FSE) peut être lancé parallèlement au module $M$-$SP_2$ (résidant par exemple dans le calculateur du système ESP), de façon que le décollement soit détecté dès qu'il se produit, sans délai supplémentaire.

Lorsque la deuxième étape de test $c_2$ est vérifiée à la valeur vraie, le programme de décollement est arrêté à l'étape $\underline{e}$ et le processus de décollement est terminé.

De même, lorsque, en réponse à la première étape de test $\underline{a}$ le test de collage des plaquettes n'est pas vérifié, les plaquettes n'étant pas collées, le module de programme de décollement amène directement à l'étape $\underline{e}$ de fin de processus de décollement, le cas échéant par l'intermédiaire d'une étape $\underline{f}$ consistant en une actualisation de la première étape de test $\underline{a}$ dans les conditions qui seront décrites ci-après.

Pour la mise en oeuvre du processus d'actualisation de l'étape de test $\underline{a}$, lors de l'étape $\underline{f}$ de la figure 3b, le système de frein FSE objet de la présente invention comporte, avantageusement, une mémoire permanente pm, de préférence une mémoire reprogrammable électriquement et EEPROM, par exemple, connectée au calculateur $\mu$P et comportant des valeurs échantillonnées d'une loi nominale de l'effort de rappel du récepteur de frein associé à chaque plaquette en fonction de la course du récepteur de frein en l'absence de collage des plaquettes de frein. Cette loi correspond à la loi nominale précédemment citée dans la description pour la mise en oeuvre du procédé objet de la présente invention.

En outre, le frein FSE objet de la présente invention comporte, de manière classique, un dispositif d'échantillonnage des valeurs de la loi d'évolution courante de l'effort de rappel du récepteur de frein associé à chaque plaquette au cours d'un processus de desserrage du frein FSE.

Sur commande de desserrage du frein FSE, tel que représenté en figure 2b par exemple, la première étape de test $\underline{a}$ de décollage des plaquettes peut être mise en oeuvre, ainsi que représenté sur la figure 3c.

A titre d'exemple non limitatif, on commence par donner, par exemple, un numéro d'ordre $\underline{nr}$ à la commande de desserrage de frein FSE.

La commande de desserrage de frein précitée provoque, en une étape $a_0$, l'appel des valeurs échantillonnées de la loi nominale de l'effort de rappel du récepteur de frein, loi désignée $LER_N$.

De même, la commande de desserrage de frein FSE provoque la commande du dispositif d'échantillonnage à l'étape $a_1$ de la loi d'évolution courante de l'effort de rappel du récepteur de frein associé à chaque plaquette, la loi d'évolution courante étant désignée

$LE_c$.

A titre d'exemple non limitatif, on indique que les étapes $a_0$ et $a_1$ peuvent être mises en oeuvre successivement, en temps partagé ou en répartition de tâches.

Lorsqu'on dispose des valeurs représentatives de la loi $LER_N$ et de la loi d'évolution $LE_c$, l'on procède à une comparaison, à l'étape $a_2$, des valeurs correspondantes représentatives des lois au moyen d'un module de comparaison des valeurs échantillonnées représentatives de la loi nominale et de la loi d'évolution courante.

De manière spécifique, on indique ainsi que les étapes $a_0$, $a_1$ et $a_2$ de la figure 3b constituent un mode de mise en oeuvre spécifique non limitatif de l'étape de test a de la figure 3b. L'étape $a_2$ consiste à vérifier à la valeur vraie l'identité ou la similitude des valeurs représentatives de la loi $LER_N$ et de la loi $LE_c$, cette identité ou similitude étant notée :

$$LER_N \cong LE_c.$$

Lorsque la vérification à la valeur vraie de la comparaison des valeurs échantillonnées à l'étape $a_2$ est obtenue, une réponse négative à la première étape de test, c'est-à-dire test a de la figure 3b est alors obtenue, les plaquettes n'étant pas collées. Au contraire, sur réponse négative à l'étape $a_2$ de la figure 3c, une réponse positive, à l'étape a de la figure 3b est obtenue, les plaquettes étant collées.

Dans cette situation, l'étape b mettant en oeuvre le processus de décollement des plaquettes est appelée. Dans la situation opposée, c'est-à-dire sur réponse positive au test $a_2$, les plaquettes étant non collées, l'étape f d'actualisation de la figure 3b peut alors être mise en oeuvre de la manière non limitative ci-après : on réalise une étape de test de la valeur nr du nombre de commandes de desserrage de frein FSE vis-à-vis d'une valeur arbitraire R, cette comparaison consistant à vérifier que nr est un multiple de R.

Lorsque nr n'est pas un multiple de R, sur réponse négative à l'étape $f_1$ de la figure 3c, alors le module de sous-programme M-SP$_1$ permet d'appeler directement l'étape e de fin de décollement.

Au contraire, lorsque le nombre de commandes de desserrage de frein nr est un multiple de R, sur réponse positive à l'étape $f_1$, alors l'on procède, à l'étape $f_2$, à une réactualisation des valeurs échantillonnées de la loi nominale de l'effort de rappel du récepteur de frein associé à chaque plaquette en fonction de la course et du récepteur de frein. A titre d'exemple non limitatif, on peut prendre pour loi nominale $LER_N$ la valeur de la loi d'évolution courante $LE_c$ échantillonnée à l'étape $a_1$, cette loi constituant la dernière loi d'évolution courante échantillonnée en l'absence de collage des plaquettes. Cette opération est réalisée à l'étape $f_2$ et symbolisée par la relation :

$$LER_N = LE_c.$$

L'étape f2 est alors suivie de l'étape de fin de décollement e. L'étape $f_2$ est, bien entendu, assortie d'une étape de mémorisation de la nouvelle loi $LER_N$ dans la mémoire programmable, mémoire permanente pm.

On comprend ainsi que, grâce à la mise en oeuvre de l'étape d'actualisation telle que représentée en figure 3c et, en particulier, des étapes $f_1$ et $f_2$, il est possible de disposer de la dernière loi d'évolution courante de l'effort de rappel du récepteur de frein associée à chaque plaquette correspondant à la dernière situation de desserrage de frein pour laquelle les plaquettes n'étaient pas collées, ce qui permet d'établir un diagnostic de test de collage de plaquettes exempt de tout phénomène de dérive du type usure des câbles ou des plaquettes ou des variations des caractéristiques des récepteurs de frein d'un véhicule à l'autre.

Bien entendu, alors que dans l'exemple donné en figure 3c, le test de l'étape $f_1$ est établi sur un nombre successif de commandes de desserrage de frein, le nombre R de référence pouvant être pris égal à, par exemple, 200 ou 300, il est également possible de remplacer les paramètres nr et R de nombre de commandes de desserrage de frein par des critères temporels, par exemple.

Le procédé et le système de frein de stationnement piloté FSE objet de la présente invention apparaissent particulièrement avantageux dans la mesure où, lorsque le véhicule est équipé d'un frein de stationnement piloté FSE et d'un système ESP ou ESH, la mise en oeuvre d'un tel procédé et d'un tel système de frein FSE ne nécessite l'installation d'aucun capteur spécifique supplémentaire. En effet, on indique que, en ce qui concerne le module d'échantillonnage, celui-ci est déjà présent dans le système de frein FSE.

Enfin, et en raison de l'interconnexion en réseau multiplexé du système de frein FSE proprement dit et du système ESP, les éléments constitutifs du système de frein FSE peuvent être délocalisés, pourvu que ces éléments soient interconnectés au réseau précité. Ainsi, à titre d'exemple non limitatif, on indique que le système de frein de stationnement piloté, objet de la présente invention, peut comporter deux calculateurs. Dans ce mode de mise en oeuvre, l'un au moins des modules de sous-programmes, constitutifs du module de programme de décollement, réside dans la mémoire exécutable d'un calculateur autre que le calculateur dans la mémoire duquel réside le module de programme de décollement.

**Revendications**

1. Procédé de décollement des plaquettes de frein collées, par le gel ou la glace, sur le disque d'un système de frein de stationnement piloté, **caractérisé en ce que**, le frein de stationnement piloté étant en position de commande desserré, celui-ci consiste à appliquer au moins une impulsion d'effort supplémentaire auxdites plaquettes, ce qui permet de transférer une partie de l'énergie mécanique fournie par le travail des forces créées par ladite au moins une impulsion d'effort supplémentaire à l'interface plaquette/glace/disque sous forme de chaleur latente de fusion de la glace présente à l'interface plaquette/glace/disque et de provoquer une augmentation de température et du volume de glace fondue, entraînant le décollement desdites plaquettes.

2. Procédé selon la revendication 1, **caractérisé en ce que** ladite au moins une impulsion d'effort supplémentaire est répétée successivement, ce qui permet, d'une part, d'augmenter progressivement l'énergie calorifique à l'interface et, d'autre part, d'appliquer des vibrations mécaniques à l'interface plaquette/glace/disque favorisant le processus de décollage par rupture de la glace.

3. Procédé selon la revendication 1 ou 2, **caractérisé en ce que** celui-ci comprend, préalablement à l'étape consistant à appliquer au moins une impulsion d'effort supplémentaire, une étape de détection de collage desdites plaquettes.

4. Procédé selon l'une des revendications 1 à 3, **caractérisé en ce que** chaque impulsion d'effort supplémentaire est constituée par une pression supplémentaire appliquée et maintenue sur chaque plaquette de frein pendant une durée de maintien comprise entre 0,01 s et 0,1 s.

5. Procédé selon la revendication 4, **caractérisé en ce que** chaque impulsion d'effort supplémentaire successive est séparée d'une impulsion d'effort supplémentaire précédente d'une durée sensiblement égale à la durée de maintien.

6. Procédé selon l'une des revendications 2 à 5, **caractérisé en ce que** la fréquence de répétition desdites impulsions successives est comprise entre 1 Hz et 50 Hz.

7. Procédé selon l'une des revendications 1 à 6, **caractérisé en ce que** ladite au moins une impulsion d'effort supplémentaire est suivie d'une étape de détection du décollement des plaquettes.

8. Procédé selon la revendication 7, **caractérisé en ce que** l'étape de détection du décollement des plaquettes consiste à détecter une variation de l'effort appliqué au câble, sur rappel des récepteurs de frein.

9. Procédé selon l'une des revendications 1 à 6 et 7, **caractérisé en ce que** celui-ci consiste :

    - à répéter le processus de décollement tant que l'étape de détection du décollement des plaquettes ne révèle pas le décollement des plaquettes, et
    - à suspendre le processus de décollement lorsque l'étape de détection du décollement des plaquettes révèle le décollement des plaquettes.

10. Système de frein de stationnement piloté comprenant au moins un calculateur et une mémoire de programme d'actionnement des récepteurs de freins et des plaquettes vis-à-vis du disque de frein associé à chaque roue du véhicule, **caractérisé en ce que** ladite mémoire de programme comporte, en outre :

    un module de programme de décollement de plaquettes enregistré dans ladite mémoire de programme exécutable par ledit calculateur et permettant d'engendrer au moins une impulsion d'effort supplémentaire appliqué aux plaquettes, ce qui permet de transférer une partie de l'énergie mécanique fournie par le travail des forces créées par ladite au moins une impulsion d'effort supplémentaire à l'interface plaquette/glace/disque sous forme de chaleur latente de fusion de l'eau et de la glace présents à l'interface plaquette/glace/disque et de provoquer une augmentation de température et du volume de glace fondue, entraînant le décollement desdites plaquettes.

11. Système selon la revendication 10, **caractérisé en ce que** ledit module de programme de décollement comprend au moins :

    - un premier module de sous-programme de détection de collage desdites plaquettes ;
    - un deuxième module de sous-programme de génération d'au moins une impulsion d'effort supplémentaire et d'application de ladite au moins une impulsion d'effort supplémentaire auxdites plaquettes ;
    - un troisième module de sous-programme de détection du décollement desdites plaquettes, ledit module de programme de décollement permettant au moins :

        a) sur appel dudit premier module de sous-programme, de lancer une première étape de test de collage desdites plaquettes ; et, sur réponse positive à ladite première étape de test, lesdites plaquettes étant collées,

b) d'appeler ledit deuxième module de sous-programme, pour engendrer et appliquer au moins une impulsion d'effort supplémentaire auxdites plaquettes ; et

c) d'appeler ledit troisième module de sous-programme, pour exécuter une deuxième étape de test de décollement desdites plaquettes, et, sur réponse négative à ladite deuxième étape de test,

d) de répéter les phases b) et c) précédentes tant que ladite deuxième étape de test n'est pas vérifiée à la valeur vraie, lesdites plaquettes étant toujours collées ; et

e) arrêter le programme de décollement et le processus de décollement, sinon.

**12.** Système selon les revendications 10 et 11, **caractérisé en ce que** celui-ci comporte, en outre :

-   une mémoire permanente connectée audit calculateur, comportant des valeurs échantillonnées d'une loi nominale de l'effort de rappel du récepteur de frein associé à chaque plaquette en fonction de la course du récepteur de frein, en l'absence de collage des plaquettes de frein ;
-   un dispositif d'échantillonnage des valeurs de la loi d'évolution courante de l'effort de rappel dudit récepteur de frein associé à chaque plaquette au cours d'un processus de desserrage du frein de stationnement piloté de stationnement ;
-   des moyens de comparaison des valeurs échantillonnées de ladite loi nominale et de ladite loi d'évolution courante, une réponse négative à ladite première étape de test étant obtenue pour une vérification à la valeur vraie de la comparaison des valeurs échantillonnées de ladite loi nominale et de ladite loi d'évolution courante, lesdites plaquettes n'étant pas collées, une réponse positive à ladite première étape de test étant obtenue pour une absence de vérification à la valeur vraie de ladite comparaison.

**13.** Système selon la revendication 12, **caractérisé en ce que** ladite mémoire permanente est une mémoire morte reprogrammable électriquement et **en ce que** ledit module de programme de décollement comporte, en outre, un module de sous-programme d'actualisation périodique desdites valeurs échantillonnées de ladite loi nominale.

**14.** Système selon l'une quelconque des revendications 10 à 13, **caractérisé en ce que** celui-ci comporte deux calculateurs, l'un au moins des modules de sous-programmes, constitutifs du module de programme de décollement, résidant dans la mémoire exécutable d'un calculateur autre que le calculateur dans la mémoire duquel réside le module de programme de décollement.

FIG.1 (Art antérieur)

Frein serré

FSE

P

G

D

Processus de
décollement

ΔP

P

E

G

D

## FIG.2a

Décollement

Commande de
desserrage
FSE et
détection du
collage

Procédure
de
décollement

Détection
du
décollement

Desserrage
FSE

1    2    3   4

C max

Course FSE

0

E max

Effort FSE    0

P max

Pression ESP
sur roues
arrières    0

EP 1 407 951 A1

FIG.2b

## FIG.3a

FIG.3b

FIG.3c

**Office européen des brevets**

**RAPPORT DE RECHERCHE EUROPEENNE**

Numéro de la demande

EP 03 29 2390

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 101 14 471 A (BOSCH GMBH ROBERT) 26 septembre 2002 (2002-09-26) * le document en entier * --- | 1,10 | B60T13/74 B60T7/10 |
| A | DE 199 43 601 A (BOSCH GMBH ROBERT) 15 mars 2001 (2001-03-15) * colonne 4, ligne 49 - ligne 58 * --- | 1,10 | |
| A | DE 28 15 018 A (BOSCH GMBH ROBERT) 18 octobre 1979 (1979-10-18) * page 16, dernier alinéa - page 17, dernière ligne; figures 1-3 * --- | 1,10 | |
| A | WO 01 62565 A (NAKAYAMA MASANORI ;HIURA TETSUO (JP); KUROISHI IRON WORKS CO LTD ()) 30 août 2001 (2001-08-30) * abrégé; figures 1,7 * ----- | 1,10 | |

**DOMAINES TECHNIQUES RECHERCHES (Int.Cl.7)**

B60T

Le présent rapport a été établi pour toutes les revendications

| Lieu de la recherche | Date d'achèvement de la recherche | Examinateur |
|---|---|---|
| BERLIN | 5 janvier 2004 | Blurton, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 03 29 2390

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-01-2004

| Document brevet cité au rapport de recherche | | Date de publication | Membre(s) de la famille de brevet(s) | | Date de publication |
|---|---|---|---|---|---|
| DE 10114471 | A | 26-09-2002 | DE | 10114471 A1 | 26-09-2002 |
| | | | GB | 2373834 A | 02-10-2002 |
| | | | JP | 2002364683 A | 18-12-2002 |
| DE 19943601 | A | 15-03-2001 | DE | 19943601 A1 | 15-03-2001 |
| DE 2815018 | A | 18-10-1979 | DE | 2815018 A1 | 18-10-1979 |
| WO 0162565 | A | 30-08-2001 | JP | 2001233188 A | 28-08-2001 |
| | | | CA | 2401074 A1 | 30-08-2001 |
| | | | EP | 1258405 A1 | 20-11-2002 |
| | | | WO | 0162565 A1 | 30-08-2001 |
| | | | US | 2003010149 A1 | 16-01-2003 |

EPO FORM P0460

Pour tout renseignement concernant cette annexe : voir Journal Officiel de l'Office européen des brevets, No.12/82